Europäisches Patentamt

(19) **European Patent Office**

**Office européen des brevets**

(11) Numéro de publication: **0 086 116**
**A1**

(12) **DEMANDE DE BREVET EUROPEEN**

(21) Numéro de dépôt: **83400016.8**

(22) Date de dépôt: **04.01.83**

(51) Int. Cl.³: **H 04 N 5/38**

(30) Priorité: **08.01.82 FR 8200233**

(43) Date de publication de la demande:
**17.08.83 Bulletin 83/33**

(84) Etats contractants désignés:
**AT CH DE IT LI LU NL SE**

(71) Demandeur: **THOMSON-CSF**
**173, Boulevard Haussmann**
**F-75379 Paris Cedex 08(FR)**

(72) Inventeur: **Ta Hong, Anh**
**THOMSON-CSF SCPI 173, bld Haussmann**
**F-75379 Paris Cedex 08(FR)**

(72) Inventeur: **Blum, Guy**
**THOMSON-CSF SCPI 173, bld Haussmann**
**F-75379 Paris Cedex 08(FR)**

(74) Mandataire: **Turlèque, Clotilde et al,**
**THOMSON-CSF SCPI 173, Bld Haussmann**
**F-75379 Paris Cedex 08(FR)**

(54) **Dispositif de séparation de deux porteuses très haute fréquence, et émetteur de télévision comportant un tel dispositif.**

(57) L'invention concerne un dispositif de séparation de deux porteuses très haute fréquence.

Elle consiste à utiliser un générateur de fréquence (21) stabilisé, émettant un signal à une fréquence donnée et des moyens de transposition de fréquence (22, 23, 24) recevant ce signal et un signal composite contenant les deux fréquences porteuses à séparer et délivrant un signal composite contenant deux porteuses basse fréquence qui sont séparées par deux filtres (35, 36) basses fréquence.

Elle s'applique aux émetteurs de télévision à deux voies son modulées en fréquence.

Fig.2

EP 0 086 116 A1

1

### Dispositif de séparation de deux porteuses très haute fréquence et émetteur de télévision comportant un tel dispositif

La présente invention concerne les dispositifs de séparation de deux porteuses très haute fréquence et plus particulièrement les émetteurs de télévision (TV en abrégé) comportant un tel dispositif.

Classiquement ces dispositifs sont utilisés dans la boucle d'asservissement permettant d'effectuer un contrôle automatique de gain d'un amplificateur à gain variable recevant à l'entrée le signal composite son et image des émetteurs TV à amplification commune. Le signal composite est obtenu par un mélange des deux signaux son modulés en fréquence et d'un signal image. Pour réaliser la boucle généralement on prélève à l'aide d'une sonde (par exemple) une partie du signal à la sortie de l'amplificateur de puissance de l'émetteur. Ce signal est exploité pour commander l'amplificateur à gain variable. L'exploitation consiste en fait à séparer les porteuses son et image à l'aide d'un filtre (RC ou LC par exemple) afin de connaître leurs niveaux de tension respectifs. L'un de ces niveaux permet de réajuster le gain de l'amplificateur de sorte que le niveau de puissance de l'amplificateur de puissance reste constant à l'émission.

Un problème majeur apparaît dans ce type de réalisation c'est celui du choix du filtre. En effet la fréquence porteuse du son est située à environ 5 MHz de celle de l'image, et toutes deux sont situées après transposition à la fréquence d'émission dans une gamme que l'on a qualifié, pour simplifier, de bande à très haute fréquence couvrant la gamme des très hautes fréquences (VHF : 30 MHz à 300 MHz) et une partie de la gamme des ultra-hautes fréquences (UHF : 300 MHz à 1 GHz). Il est très difficile d'obtenir à ces fréquences des filtres suffisamment sélectifs pour avoir une bonne séparation. Généralement le signal son est parasité par le signal image.

Le problème du filtrage ne peut plus être résolu de cette manière lorsque l'émetteur comporte deux voies son et que l'on veut effectuer pour les mêmes raisons que précédemment, une boucle d'asservissement afin de réaliser un contrôle automatique de gain de l'amplificateur à gain variable. En effet dans ce cas, cet amplificateur reçoit le signal composite son 1 plus son 2. La bande passante allouée au signal son est très étroite environ une centaine de kilo-hertz. Les deux fréquences porteuses des signaux son modulés en fréquence sont donc très proches l'une de l'autre et de plus ces porteuses sont situées dans la gamme des très hautes fréquences ou des ultra-hautes fréquences. Des limites technologiques ne permettent donc pas d'obtenir des filtres ayant les caractéristiques demandées dans ce cas.

Pour remédier à ces difficultés la présente invention propose un dispositif de séparation de deux porteuses très haute fréquence, comportant :

- un générateur de fréquence pour recevoir un signal de référence à une fréquence F1 et pour délivrer un signal à une fréquence F7 ;

- un premier mélangeur pour recevoir le signal à la fréquence F7 et un signal à une très haute fréquence F0, et délivrer après mélange et filtrage de ces deux signaux, un signal à une très haute fréquence F8 ;

- un deuxième mélangeur pour recevoir un signal composite contenant deux très hautes fréquences porteuses F4-F5, F4-F6, un signal à une fréquence F4 et pour mélanger ces signaux, les filtrer et délivrer un signal composite contenant deux très hautes fréquences porteuses à séparer F5, F6 ;

- un troisième mélangeur pour recevoir le signal composite contenant les deux très hautes fréquences porteuses à séparer et le signal à la fréquence F8, mélanger et filtrer ces signaux pour délivrer un signal contenant les deux porteuses transposées en basse fréquence ;

- un amplificateur pour recevoir le signal issu du troisième mélangeur, l'amplifier et délivrer un signal amplifié ;

- des moyens pour recevoir le signal amplifié et séparer les deux fréquences porteuses basse fréquence contenues dans ce signal.

Les particularités et avantages de la présente invention apparaîtront dans la description non limitative qui suit se rapportant à un mode de réalisation, en référence aux figures annexées qui représentent :

- figure 1, un schéma d'un dispositif de séparation de deux porteuses VHF conforme à l'invention pour un émetteur TV à deux voies son ;

- figure 2, un schéma d'une réalisation particulière du générateur de fréquence 21 et des moyens de séparation 26 des porteuses basse fréquence.

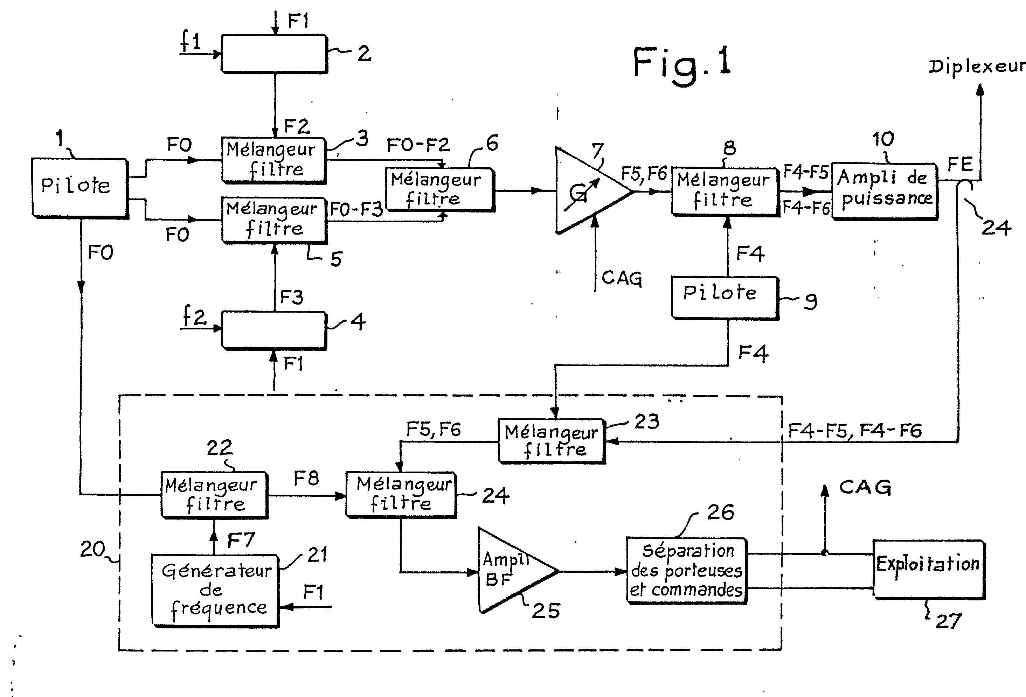

Suivant le schéma de la figure 1, l'émetteur TV comporte un pilote 1 qui est généralement un oscillateur à quartz stabilisé en fréquence et qui génère la fréquence image intermédiaire F0 située par conséquent dans la gamme des hautes fréquences. Un oscillateur 2 reçoit à une entrée un signal son f1 basse fréquence envoyé par un studio d'enregistrement. Cet oscillateur 2 reçoit d'autre part à une autre entrée le signal de synchronisation de ligne F1 utilisé dans le récepteur pour synchroniser le signal de vision sur l'écran. Ce signal F1 permet de stabiliser en phase l'oscillateur 2 en effectuant un asservissement sur la phase du signal qu'il émet. Ce signal est modulé en fréquence et porté par une fréquence F2 (telle que $F0 > F2$) et dite communément "interporteuse". Un mélangeur 3 reçoit d'une part la fréquence F0 et d'autre part le signal son modulé porté par l'interporteuse F2 et délivre après filtrage des fréquences indésirables le signal son à fréquence intermédiaire.

L'ensemble des éléments référencés 1 à 3 permet d'obtenir une première voie son à fréquence intermédiaire délivrant un signal modulé en fréquence dont la porteuse F0-F2 est située dans la gamme des hautes fréquences.

Une deuxième voie son est réalisée de façon identique à la première. Pour cela un oscillateur 4 reçoit à une entrée un signal son f2 basse-fréquence. Cet oscillateur stabilisé par le signal de synchronisation ligne F1 délivre un signal son modulé en fréquence porté par une fréquence F3 (telle que $F0 > F3$) dite "interporteuse". Ce signal modulé est reçu à une entrée d'un mélangeur 5 qui reçoit à une autre entrée la fréquence image F0 générée par le pilote 1. Ce mélangeur 5 délivre après filtrage des fréquences indésirables un signal modulé en fréquence dont la porteuse F0-F3 est située dans la gamme des hautes fréquences.

Les deux voies son ainsi obtenues sont reliées par un circuit de sommation et de filtrage 6 qui est un mélangeur classique et qui permet d'obtenir le signal son composite. Ce signal composite est ainsi transmis sur un seul canal, ce qui permet d'effectuer par la suite un seul et même traitement sur les deux signaux d'origine.

Le signal de sortie du circuit 6 est amplifié par un amplificateur à gain variable 7.

Avant émission du signal son vers un diplexeur on pratique une nouvelle transposition en fréquence à l'aide d'un mélangeur 8. Pour cela ce mélangeur reçoit donc le signal son composite à une entrée et une fréquence VHF F4 à une autre entrée, transmise par un autre pilote 9 stabilisé. Après filtrage des fréquences indésirable le signal son composite est transmis à un amplificateur de puissance 10.

Le signal composite d'émission FE à grande puissance émis est porté par les fréquences VHF : F4-(F0-F2) et F4-(F0-F3) soit F4-F5 et F4-F6 et est transmis vers un diplexeur non représenté qui permet d'effectuer un mélange son-image.

Un dispositif de séparation de deux porteuses VHF 20 permet d'effectuer une boucle d'asservissement sur le gain de l'amplificateur 7 et permet ainsi de réaliser une commande automatique de gain. Ce dispositif 20 émet pour cela à l'une de ses sorties un signal apte à régler le gain de l'amplificateur 7. D'autre part les sorties de ce dispositif 20 sont reliées respectivement à deux wattmètres faisant partie d'un circuit d'exploitation 27 de l'émetteur. Les wattmètres permettent ainsi de contrôler le niveau de puissance de chaque voie.

Le dispositif de séparation de deux porteuses VHF 20 comprend un générateur de fréquence 21 stabilisé en phase par le signal de synchronisation ligne F1. Ce générateur émet une fréquence fixe F7 telle que FO > F7, cette fréquence est sensiblement égale aux fréquences F2 et F3 et peut être considérée comme une troisième interporteuse. Ce dispositif 20 comprend également des moyens de transposition de fréquence comprenant un ensemble de mélangeurs et filtres 22, 23, 24. Le mélangeur 22 reçoit le signal à la fréquence F0 et le signal à la fréquence F7, les deux signaux sont additionnés et filtrés et le signal en sortie du mélangeur a une fréquence de F0-F7 = F8. Le mélangeur 23 reçoit le signal à la fréquence F4 et le signal composite FE dont les porteuses sont F4-F5 et F4-F6, les signaux sont additionnés puis filtrés dans le mélangeur et les signaux en sorties ont des fréquences porteuses F4-(F4-F5) et F4-(F4-F6) soit F5 et F6, ce qui permet de séparer les fréquences F5 et F6 après amplification commune.

Le mélangeur 24 reçoit les signaux de sortie des mélangeurs 22 et 23. Après addition de ces signaux puis filtrage les signaux ont des fréquences porteuses F8-F5 et F8-F6 qui sont des signaux basse-fréquence. Les signaux en sortie de ce mélangeur 24 sont donc des signaux modulés basse fréquence dont les porteuses sont F8-F5 et F8-F6.

Un amplificateur BF (basse fréquence) 25 amplifie ces signaux et les transmet à un circuit 26 permettant de séparer les deux fréquences porteuses BF puis de redresser les signaux. Le redressement permet de déterminer le niveau de tension continue de ces signaux puis le niveau de puissance de chacune des voies son après émission. L'une de ces tensions permet d'appliquer un signal CAG sur la commande de gain de l'amplificateur 7 pour réajuster ce gain de sorte que la sortie de l'amplificateur de puissance reste constante.

Il en résulte que le dispositif de séparation des deux porteuses 20 n'utilise que des signaux disponibles dans l'émetteur pour effectuer une transposition de fréquence et séparer les porteuses basse fréquence ainsi obtenues.

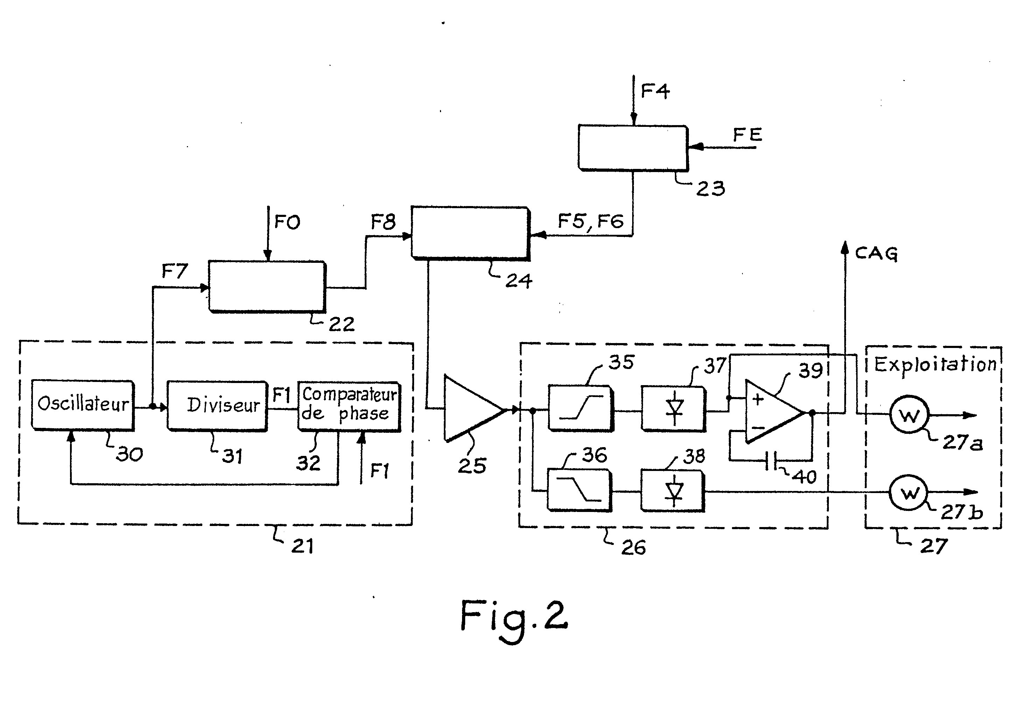

Une réalisation particulière du générateur 21 et du circuit de séparation 26 est représentée sur la figure 2.

Le générateur 21 comporte un oscillateur 30 qui émet le signal à la fréquence F7. Pour pouvoir être stabilisé en phase par le signal de synchronisation on utilise un diviseur 31 qui permet d'appliquer un signal à la fréquence de synchronisation de ligne à un comparateur de phase 32 qui reçoit en même temps le signal de synchronisation de ligne F1 de référence. La sortie du comparateur donne l'écart de phase entre les deux signaux incidents qui est appliqué à l'oscillateur. La boucle d'asservissement réalisée stabilise la phase du signal émis par l'oscillateur.

Le circuit de séparation des deux porteuses comprend deux filtres 35 et 36 et deux détecteurs 37 et 38.

Les filtres 35 et 36 sont l'un un filtre passe-haut (soit le filtre 35 par exemple) l'autre 36 un filtre passe-bas. Si bien qu'à la sortie du filtre 35 on obtient le signal dont la porteuse BF est la plus élevée et à la sortie du filtre 36 on obtient le signal dont la porteuse BF est la plus faible.

Les détecteurs 37 et 38 permettent de détecter les signaux et de redresser ces signaux. A leur sortie on obtient une tension continue correspondant à l'amplitude de la porteuse. La tension la plus élevée est appliquée à l'entrée non inverseuse d'un amplificateur intégrateur 39-40, l'entrée inverseuse étant évidemment rebouclée sur la sortie par l'intermédiaire d'un condensateur 40. Le signal CAG est obtenu à la sortie de l'amplificateur intégrateur 39 et commande l'amplificateur 7.

Dans notre réalisation les signaux ayant subi une transposition de fréquence sont situés dans la gamme des très hautes fréquences, ce terme de haute fréquence ayant un sens plus large qu'habituellement puisqu'il comprend dans ce cas une partie des ultra-hautes fréquences. Il est clair que la transposition de fréquence des signaux dépend de la fréquence à laquelle on désire émettre. Or dans certaines réalisations on effectue des transpositions permettant d'obtenir des fréquences situées dans la gamme des ultra-hautes fréquences pouvant aller de 300 MHz à 1000 MHz.

L'invention s'applique donc à des émetteurs émettant à des fréquences porteuses pouvant aller de 30 MHz à 1 GHz environ.

En conclusion, le dispositif de séparation de deux porteuses 20 peut être utilisé dans le cas des émetteurs TV à une seule voie son. Il permet de réaliser une commande automatique de gain sur l'amplificateur à gain variable qui alors reçoit le signal composite son plus image. Le filtrage basse fréquence portera dans ce cas sur la porteuse son et la porteuse image.

Ce dispositif 20 permet plus particulièrement de résoudre le problème de séparation de deux fréquences porteuses dans le cas d'émetteurs à deux voies son modulées en fréquence. Il permet également d'améliorer la séparation des deux porteuses dans le cas des émetteurs à une seule voie son et amplification commune du son et de l'image. La séparation se fait dans les deux cas par une transposition en basse fréquence réalisée à l'aide des signaux disponibles dans l'émetteur, puis par simple filtrage de ces basses fréquences.

REVENDICATIONS

1. Dispositif de séparation de deux porteuses très haute fréquence, caractérisé en ce qu'il comporte :

- un générateur de fréquence (21) pour recevoir un signal de référence à une fréquence F1 et pour délivrer un signal à une fréquence F7 ;

- un premier mélangeur (22) pour recevoir le signal à la fréquence F7 et un signal à très haute fréquence F0, et délivrer après mélange et filtrage de ces deux signaux, un signal à une très haute fréquence F8 ;

- un deuxième mélangeur (23) pour recevoir un signal composite contenant deux très hautes fréquences porteuses F4-F5, F4-F6, un signal à une fréquence F4 et pour mélanger ces signaux, les filtrer et délivrer un signal composite contenant deux très hautes fréquences porteuses à séparer F5, F6 ;

- un troisième mélangeur (24) pour recevoir le signal composite contenant les deux très hautes fréquences porteuses à séparer et le signal à la fréquence F8, mélanger et filtrer ces signaux pour délivrer un signal contenant les deux porteuses transposées en basse fréquence ;

- un amplificateur (25) pour recevoir le signal issu du troisième mélangeur, l'amplifier et délivrer un signal amplifié ;

- des moyens de séparation (26) pour recevoir le signal amplifié et séparer les deux fréquences porteuses basse fréquence contenues dans ce signal.

2. Dispositif selon la revendication 1, caractérisé en ce que le générateur de fréquence (21) comporte :

- un oscillateur (30) pour émettre le signal à la fréquence F7 ;

- un diviseur (31) pour recevoir le signal à la fréquence F7 et délivrer un signal à une fréquence égale à la fréquence F1 ;

- un comparateur (32) pour recevoir le signal issu du diviseur (31) et par ailleurs le signal de référence à la fréquence F1 et pour délivrer un signal stabilisant la phase du signal émis par l'oscillateur.

3. Dispositif selon la revendication 1, caractérisé en ce que les moyens de séparation (26) comportent :

- un filtre passe-haut (35) pour recevoir le signal amplifié contenant les deux fréquences porteuses basse fréquence et pour délivrer le signal dont la fréquence porteuse est la plus grande ;

- un filtre passe-bas pour recevoir ce signal amplifié et délivrer le signal dont la fréquence porteuse est la plus faible ;

- un premier détecteur (37) pour recevoir le signal issu du filtre passe-haut (35), détecter ce signal et délivrer un signal redressé ;

- un amplificateur intégrateur (39) pour recevoir ce signal redressé et délivrer un signal de commande (CAG) ; et

- un deuxième détecteur (38) pour recevoir le signal issu du filtre passe-bas (36) et délivrer un signal redressé.

4. Emetteur de télévision du type comprenant un pilote (1) pour délivrer un signal à la fréquence F0 ;

- des premiers moyens (2) pour obtenir un signal modulé par une première basse fréquence f1 autour d'une première interporteuse F2 ;

- des deuxièmes moyens (3) pour obtenir un signal modulé par une deuxième basse fréquence f2 autour d'une deuxième interporteuse F3 ;

- des troisièmes moyens (3, 5, 6) pour obtenir une transposition en fréquence de ces deux signaux modulés, un filtrage puis une sommation, et délivrer ainsi un signal composite contenant deux fréquences porteuses à très haute fréquence F5 = F0-F2, F6 = F0-F3 ;

- un amplificateur à gain variable (7) pour recevoir le signal composite contenant les deux fréquences porteuses F5 = F0-F2 et F6 = F0-F3, amplifier le signal en fonction d'un signal de commande (CAG) et délivrer un signal composite amplifié ;

- des quatrièmes moyens (8, 9) pour recevoir le signal composite amplifié et transposer ce signal composite aux fréquences d'émission F4-F5 et F4-F6, F4 étant la fréquence de transposition ; et

- un amplificateur de puissance (10) pour recevoir le signal composite à émettre amplifier et émettre ce signal, caractérisé en ce que l'émetteur comprend un dispositif de séparation de deux porteuses (20) selon la revendication 1 ; en ce que l'amplificateur à gain variable (7) est commandé par le signal de commande (CAG) délivré par les moyens de séparation (26).

5. Emetteur selon la revendication 4, caractérisé en ce qu'une sonde (24) permet de capter une partie du signal composite d'émission pris à la sortie de l'amplificateur (10) et contenant les deux fréquences porteuses à séparer, et d'appliquer ce signal au deuxième mélangeur (23) du dispositif de séparation de deux porteuses (20).

Fig.1

0086116

Fig.2

Office européen
des brevets

**RAPPORT DE RECHERCHE EUROPEENNE**

Numéro de la demande

EP 83 40 0016

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl. 3) |
| A | US-A-2 297 451 (BENDEL) * Page 2, colonne de gauche, lignes 17-48 * | 1 | H 04 N 5/38 |
| | --- | | |
| A | US-A-2 750 441 (SCHLESINGER) * Colonne 2, lignes 14-40 * | 1 | |
| | --- | | |
| A | NEC RESEARCH & DEVELOPMENT, no. 59, octobre 1980, pages 72-80, Tokyo, JP HIGASHI et al.: "PCN-1200 VHF Television transmitters" | | |
| | ----- | | |

| DOMAINES TECHNIQUES RECHERCHES (Int. Cl. 3) |
|---|
| H 04 N H 03 H |

Le présent rapport de recherche a été établi pour toutes les revendications

| Lieu de la recherche LA HAYE | Date d'achèvement de la recherche 21-04-1983 | Examinateur CRISTOL Y. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82